# EUROPEAN PATENT SPECIFICATION

(11) **EP 1 792 929 B1**
(45) Date of publication and mention of the grant of the patent: **18.08.2010**
(21) Application number: 06024802.8
(22) Date of filing: 30.11.2006
(51) Int. Cl.: C08J 3/00

(54) **Process for producing granules**
Verfahren zur Herstellung von Granulat
Procédé de production de granulés

(30) Priority: 02.12.2005 JP 2005348965
(43) Date of publication of application: 06.06.2007
(73) Proprietor: Sumitomo Chemical Company, Limited, Tokyo 104-8260 (JP)
(72) Inventor: Kimura, Kenji, Osaka 560-0021 (JP)
(74) Representative: Vossius & Partner

(56) References cited:
- EP-A1- 0 565 184
- EP-A2- 0 947 539
- WO-A-98/58985
- WO-A-99/54396
- WO-A-2005/111091
- DE-A1- 19 755 561
- US-A- 5 141 772
- US-A- 5 300 539
- US-A- 5 844 042
- US-A1- 2003 204 002

## Description

The present invention relates to a process for producing granules.

It is known that a phenol-based antioxidant represented by the formula (1) remarkably reduces oxidation deterioration generated in a molded polyolefin article due to light or heat, by adding the phenol-based antioxidant to polyolefin such as polyethylene and polypropylene. 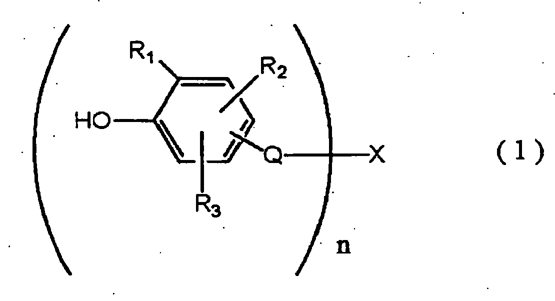 (In the formula (1), R₁ represents an alkyl group of a carbon number of 1 to 8, R₂ and R₃ each represent independently a hydrogen atom or an alkyl group of a carbon number of 1 to 8, at least one of R₂ and R₃ represents an alkyl group, Q represents a single bond, a -CH₂CH₂CO₂- group or a -CH₂CH₂CONH- group, n represents an integer of 1 to 4, X represents a n-valent hydrocarbon group of a carbon number of 1 to 22, or a divalent sulfur atom, and the hydrocarbon group may contain a hetero atom and, when n is not less than 2, may be a cyclic structure).

A phenol-based antioxidant is usually a powder having a melting point of around 100°C and a median diameter of 5 to 70 µm, is not melted, and can be added to polyolefin with better fluidity through a hopper at a plastic manufacturing field, but dust-preventing strategy was necessary due to a dust produced from a powder of the phenol-based antioxidant upon addition to polyolefin.

JP-A No. 5-179056 (e.g. Example 1) discloses a process for producing 2.5 mm pellet-like granules by mixing tetrakis {3-(3,5-di-t-butyl-4-hydroxyphenyl)-propionic acid}pentaerythrityl ester which is one kind of the antioxidant (1) with an antacid additive, heating to 115°C, which is higher than 114 °C as a melting point of the antioxidant (1) to melt a part of the antioxidant, and extruding the melt with an extruder. And, it is disclosed that when the granules are used, a dust is suppressed without using a binder which is not preferable to polyolefin such as paraffin, and fluidity is excellent upon addition to polyolefin.

In addition, JP-A No. 60-197747 (e.g. Example 1) discloses that a sulfur-based antioxidant represented by the formula (2), improves performance of preventing oxidation of a plastic by adding it to a plastic together with an antioxidant (1).

(R₄-Y-S-CH₂-CH₂-CO₂)ₘ-Z (2)

(In the formula (2), R₄ represents an alkyl group of a carbon number of 12 to 18, Y represents a single bond or a -CH₂CH₂-CO₂- group, m represents the number of 1 to 4, and Z represents a m-hydric alcohol residue of a carbon number of 5 to 18.

The present inventors tried to produce granules suitable for a plastic additive by mixing an antioxidant (2) into the antioxidant (1) as defined herein according to the method of JP-A No. 5-179056. However, a problem has been revealed that the mixture was liquefied, and an extrusion molding machine was choked with the mixture, and granules were not obtained, and productivity of granules is not necessarily sufficient.

The present inventors studied a process for producing granules having little aforementioned problems, and found out that granules can be stably produced at high productivity by heating to melt an additive composition containing an antioxidant (1) and an antioxidant (2) at a temperature lower than a specified temperature.

An object of the present invention is to provide a process for stably producing granules at high productivity.

That is, present invention provides the following [1] to [5].
[1] A process for producing granules, comprising heating and mixing an additive composition containing an antioxidant represented by the formula (1) and an antioxidant represented by the formula (2) as an essential component, wherein a content of a component having, a lowest melting point in granules is 10 to 80 % by weight based on all components constituting granules, and a temperature for heating and mixing is in a temperature range of not lower than (a melting point of a component having a lowest melting point -20) °C to lower than a melting point of a component having a lowest melting point 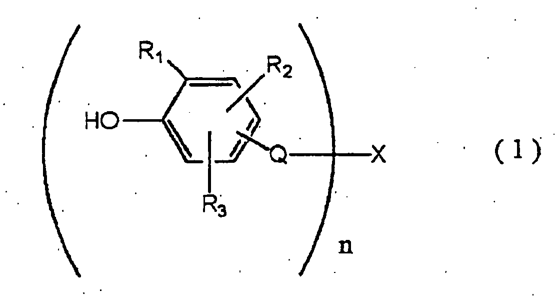 (In the formula (1), R₁ represents an alkyl group of a carbon number of 1 to 8, R₂ and R₃ each represent independently a hydrogen atom or an alkyl group of a carbon number of 1 to 8, at least one of R₂ and R₃ represents an alkyl group, Q represents a single bond, a -CH₂CH₂CO₂- group or a -CH₂CH₂CONH- group, n represents an integer of 1 to 4, X represents a n-valent hydrocarbon group of a carbon number of 1 to 22 or a divalent sulfur atom, .and the hydrocarbon group may contain a hetero atom and, when n is not less than 2, may be a cyclic structure)

   (R₄-Y-S-CH₂-CH₂-CO₂)ₘ-Z (2)

   (In the formula (2), R₄ represents an alkyl group of a carbon number of 12 to 18, Y represents a single bond or a -CH₂CH₂-CO₂- group, m represents an integer of 1 to 4, and Z represents a m-hydric alcohol residue of a carbon number of 5 to 18), wherein the antioxidant (2) is at least one kind of antioxidant selected from the group consisting of 3,3'-thiodipropionic acid di-n-dodecyl ester, 3,3'-thiodipropionic acid di-n-tetradecyl ester, 3,3'-thiodipropionic acid di-n-octadecyl ester, and tetrakis(3-n-dodecylthiopropionic acid) pentaerythrityl ester.
[2] The process according to [1], wherein heating and mixing is performed with an extrusion granulator.
[3] The process according to [1] or [2], wherein the antioxidant (1) is at least one kind of antioxidant selected from the group consisting of 3,9-bis[2-{3-(3-t-butyl-4-hydroxy-5-methylphenyl)propionyloxy}-1,1-dimethylethyl]-2,4,8,10-tetraoxaspiro[5 · 5]undecane and tetrakis[3-(3,5-di-t-butyl-4-hydroxyphenyl)propionic acid] pentaerythrityl ester.
[4] The process according to any one of [1] to [3], wherein a total amount of three components of an antioxidant (1), an antioxidant (2) and at least one kind of additive selected from the group consisting of a neutralizing agent, a phosphorus-based antioxidant, a hindered amine-based light stabilizer, an ultraviolet absorbing agent, a metal soap, an anti-blocking agent, a pigment, a flame-retardant, a nucleating agent and a filler, is not less than 90 % by weight based on all components constituting granules.

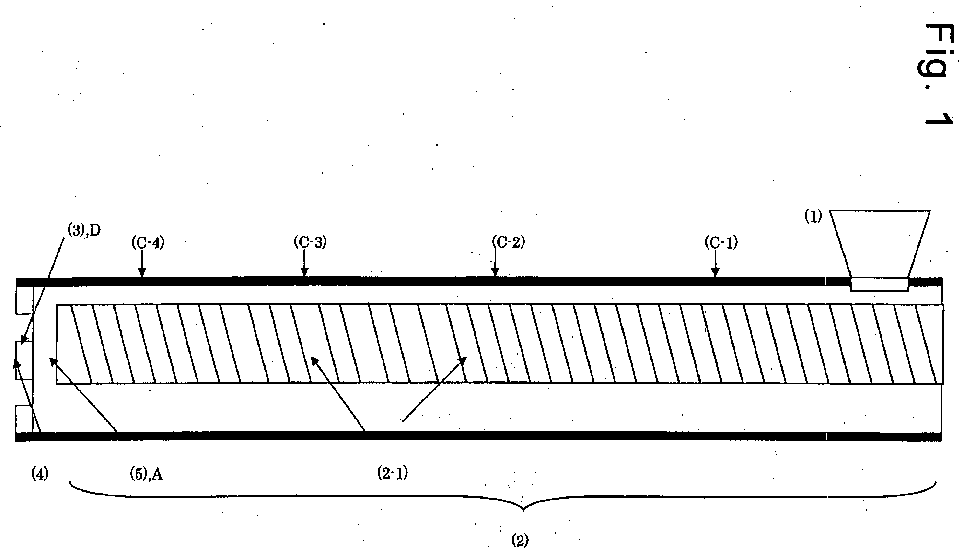

Fig. 1 is an outline view of an extruder used in the Examples.

Explanation of symbols
1. Raw material introduction port
2. Heating and mixing part
2-1. Screw cylinder
3. Die part
4. Exhaust port
5. Adaptor part
A. Position for measuring highest temperature of mixture at adaptor part
C1.-C4. Positions for set temperatures of heating and mixing parts
D. Position for set temperature of die part

The present invention will be explained in detail below.

The present invention is a process for producing granules containing an antioxidant represented by the formula (1) and an antioxidant represented by the formula (2), comprising heating and mixing those components at a temperature range of (a melting point of a component having a lowest melting point -20) °C to lower than a melting point of a component having a lowest melting point, wherein a content of a component having a lowest melting point in granules is 10 to 80 % by weight based on all components constituting granules

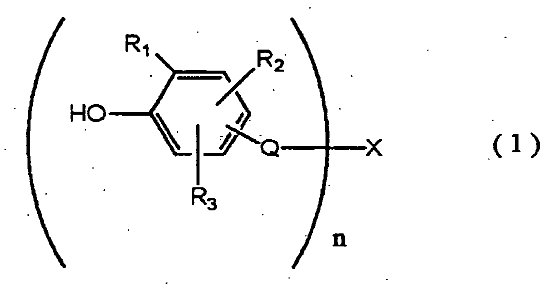

In the formula (1) R₁ represents an alkyl group of a carbon number of 1 to 8, R₂ and R₃ each represent independently a hydrogen atom or an alkyl group of a carbon number of 1 to 8, and at least one of R₂ and R₃ represents an alkyl group. Q represents a single bond, a -CH₂CH₂-CO₂- group, or a -CH₂CH₂CONH- group. And, n represents an integer of 1 to 4. X represents a n-valent hydrocarbon group of a carbon number of 1 to 22, or a divalent sulfur atom, and the hydrocarbon group may contain a hetero atom and, when n is not less than 2, may be a cyclic structure

(R₄-Y-S-CH₂-CH₂-CO₂)ₘ-Z (2)

In the formula (2), R₄ represents an alkyl group of a carbon number of 12 to 18, Y represents a single bond or a -CH₂CH₂-CO₂- group, m represents an integer of 1 to 4, and Z represents a m-hydric alcohol residue of a carbon number of 5 to 18, wherein the antioxidant (2) is at least one kind of antioxidant selected from the group consisting of 3,3'-thiodipropionic acid di-n-dodecyl ester, 3,3'-thiodipropionic acid di-n-tetradecyl ester, 3,3'-thiodipropionic acid di-n-octadecyl ester, and tetrakis(3-n-dodecylthiopropionic acid) pentaerythrityl ester.

The antioxidant (1) used in the present invention is a phenol-based antioxidant having a structure of the following formula (1):

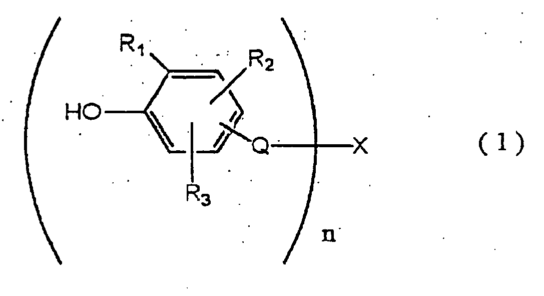

In the formula (1), R₁ represents an alkyl group of a carbon number of 1 to 8 such as a methyl group, an ethyl group, an isopropyl group, a t-butyl group, a t-pentyl group, and a t-octyl group and, inter alia, is preferably a branched alkyl group of a carbon number of 3 to 8, preferably a t-butyl group, or a t-pentyl group, or a t-octyl group.

R₂ and R₃ each represent independently a hydrogen atom or an alkyl group of a carbon number of 1 to 8 and at least one of R₂ and R₃ represents an alkyl group such as preferably a methyl group, an ethyl group, an isopropyl group, a t-butyl group, a t-pentyl group, or a t-octyl group, particularly preferably a methyl group, a t-butyl group, or a t-pentyl group. When any one of R₂ and R₃ is a hydrogen atom, the other of them is an alkyl group. When both of R₂ and R₃ are not a hydrogen atom, R₂ and R₃ are preferably a methyl group.

Q represents a single bond, a -CH₂CH₂CO₂- group, or a -CH₂CH₂CONH- group, preferably a single bond or a -CH₂CH₂CO₂-group. An oxygen atom of a -CH₂CH₂CO₂-group is usually bound to X.

X represents a n-valent hydrocarbon group of a carbon number 1 to 22 or a divalent sulfur atom. The hydrocarbon group may contain a hetero atom and, when n is not less than 2, may be a cyclic structure. Examples of the hydrocarbon group include an alkyl group of a carbon number of 1 to 18, an aralkyl group of a carbon number of 6 to 22 in which an alkyl group may by substituted, and an alkylene group of a carbon number of 1 to 18. Examples of the hetero atom include an oxygen atom, a nitrogen atom and a sulfur atom. In addition, when X is a divalent sulfur atom, n is 2 and Q is usually a single bond.

Inter alia, X is preferably an aralkyl group of a carbon number of 6 to 22 containing a hetero atom, a hydrocarbon group of a carbon number of 3 to 22 containing a hetero atom and having a cyclic group, or a hydrocarbon group of a carbon number of 3 to 22 having a cyclic group.

Examples of X when. Q is a single bond and n is 1 include the following structures.

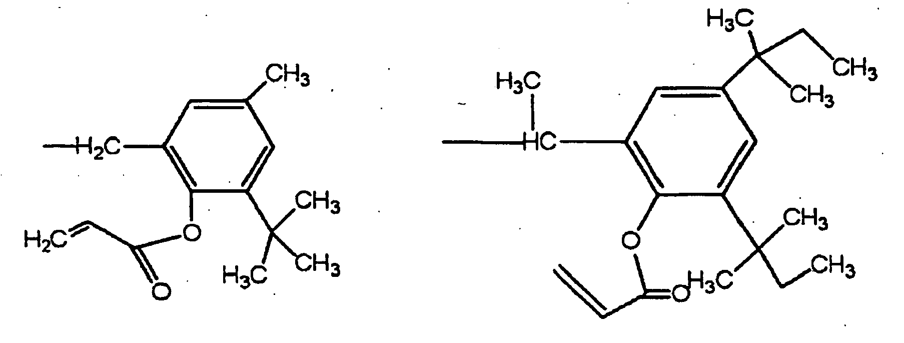

When Q is a -CH₂CH₂CO₂- group and n is 2 or 4, X is preferably a n-hydric alcohol residue of a carbon number of 1 to 18 optionally containing a hetero atom and/or a cyclic group, specifically preferably a triethylene glycol residue, a pentaerythritol residue, or a 3,9-bis(1,1-dimethyl-2-hydroxyethyl)-2,4,8,10-tetraoxaspiro[5.5] undecane residue. Herein, an alcohol residue refers to a group obtained by eliminating a hydrogen atom from alcohols.

As X when Q is a single bond, and n is 2, a sulfur atom, a methylene group, an ethylenedine group or a butylidene group and the like are preferable.

Examples of X when Q is a single bond and n is 3 include the following structures.

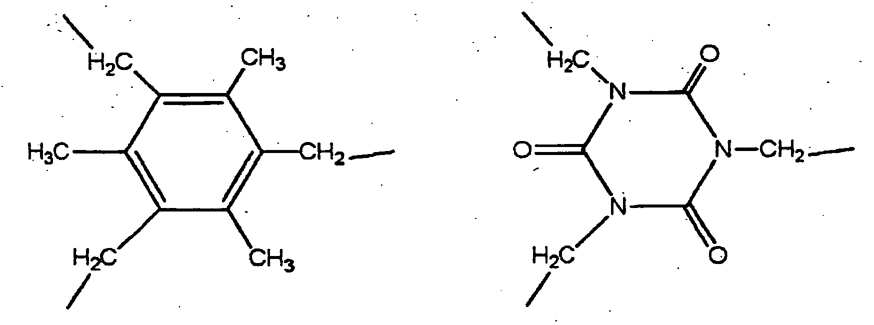

The antioxidant (1) has a melting point in a range of usually 80 to 220 ° C, preferably 90 to 150 ° C, more preferably 100 to 130 °C. When a melting point of the antioxidant (1) is not higher than 220 ° C, there is a tendency that dispersibility into polyolefin is improved and, when the melting point is not lower than 80°C, there is a tendency that mutual adhesion between particles is prevented even when stored under a high temperature and, therefore, this is preferable.

Examples of the antioxidant (1) include 3,9-bis[2-{3-(3-t-butyl-4-hydroxy-5-methylphenyl)propionyloxy}-1,1-dimethylethyl]-2,4,8,10-tetraoxaspiro[5 · 5]undecane, bis{3-(3-t-butyl-4-hydroxy-5-methylphenyl)propionic acid} triethylene glycolyl ester, tetrakis[3-(3,5-di-t-butyl-4-hydroxyphenyl)propionic acid] pentaerythrityl ester, 2-t-butyl-6-(3-t-butyl-2-hydroxy-5-methylbenzyl)-4-methylphenyl acrylate, 2-[1-(2-hydroxy-3,5-di-t-pentylphenyl)ethyl]-4,6-di-t-pentylphenyl acrylate, 2,2'-methylenebis(6-t-butyl-4-methylphenol), 4,4'-thiobis(2-t-butyl-5-methylphenol), 1,3,5-trimethyl-2,4,6-tris(3,5-di-t-butyl-4-hydroxybenzyl)benzene, and tris(3,5-di-t-butyl-4-hydroxybenzyl) isocyanurate.

As the antioxidant (1), 3,9-bis[2-{3-(3-t-butyl-4-hydroxy-5-methylphenyl)propionyloxy}-1,1-dimethylethyl]-2,4,8,10-tetraoxaspiro[5 · 5]undecane or tetrakis[3-(3,5-di-t-butyl-4-hydroxyphenyl)propionic acid] pentaerythrityl ester are preferably used.

The antioxidant (2) used in the present invention is a sulfur-based compound represented by the formula (2):

(R₄-Y-S-CH₂-CH₂-CO₂)ₘ-Z (2)

In the formula (2), R₄ represents an alkyl group of a carbon number of 12 to 18 such as a dodecyl group, a tetradecyl group, and an octadecyl group.

Y represents a single bond or a -CH₂CH₂-CO₂-group. Herein, an oxygen atom of a -CH₂CH₂-CO₂- group of Y is bound to R₄.

And, m represents the number of 1 to 4, and Z represents a m-hydric alcohol residue of a carbon number of 5 to 18 such as a dodecyl alcohol residue, a,tetradecyl alcohol residue, an octadecyl alcohol residue or a pentaerythritol residue.

When Y is a single bond, a compound in which R₄ is a dodecyl group, m is 4, and Z is a pentaerythritol residue is preferable. In addition, when Y is a -CH₂CH₂-CO₂- group, it is preferable that R₄ is a dodecyl group, a tetradecyl group or an octadecyl group, m is 1, and Z is an alcohol residue of a carbon number of 12 to 18 which corresponds to the R₄.

The antioxidant (2) is at least one kind of antioxidant selected from the group consisting of 3,3'-thiodipropionic acid di-n-dodecyl ester, 3,3'-thiodipropionic acid di-n-tetradecyl ester, 3, 3'-thiodipropionic acid di-n-octadecyl ester, and tetrakis(3-n-dodecylthiopropionic acid) pentaerythrityl ester.

The antioxidant (2) has a melting point of usually around 35 to 70 °C, preferably 45 to 55 °C. It is preferable that the melting point is not lower than 35 °C, since there is a tendency that mutual adhesion is suppressed upon storage at 45 °C, and it is preferable that the melting point is not higher than 70°C, since there is a tendency that the production time is shortened, and the heating temperature is lowered.

In the present invention, by preparing a mixture so that the antioxidant (2) is contained as an essential component, there is a tendency that granules are easily produced, and productivity is improved. A mixture is prepared so that the antioxidant (2) is preferably 10 to 80 % by weight, more preferably 10 to 50 % by weight based on all components constituting granules.

An additive described in the following additive group may be further contained in granules of the present invention in such a range that properties of resulting granules are not influenced. It is preferable that the additive is an additive selected from the following additive group, since there is a tendency that an inorganic additive or an organic additive having a melting point exceeding 70 °C reduces influence on properties as a plastic additive such as fluidity upon addition to polyolefin.

Additive group: neutralizing agent, phosphorus-based antioxidant, hindered amine-based light stabilizer, ultraviolet absorbing agent, metal soap, anti-blocking agent, pigment, flame-retardant, nucleating agent and filler.

Examples of the additives include the following additives.
Neutralizing agents such as synthetic hydrotalcite, natural hydrotalcite, potassium hydroxide etc.

Phosphorus-based antioxidants such as tris.(2,4-di-t-butylphenyl) phosphite, bis(2,4-di-t-butylphenyl) pentaerythritol diphosphite, bis(2,6-di-t-butyl-4-methylphenyl) pentaerythritol diphosphite, bis(2,4-di-cumylphenyl) pentaerythritol diphosphite, tetrakis(2,4-di-t-butylphenyl)-4,4'-diphenylene diphosphonite, 6-[3-(3-t-butyl-4-hydroxy-5-methylphenyl)propoxy]-2,4,8,10-tetra-t-butyldibenz[d,f][1,3,2]dioxaphosphepine etc.

Hindered amine-based light stabilizers such as bis(2,2,6,6-tetramethyl-4-piperidyl) sebacate, poly[{6-(1,1,3,3-tetramethylbutyl)amino-1,3,5-triazin-2,4-diyl}{(2,2,6,6-tetramethyl-4-piperidyl)imino}-1,6-hexamethylene{(2,2,6,6-tetramethyl-4-piperidyl)imino}] etc.

Ultraviolet absorbing agents such as 2-(2-hydroxy-5-methylphenyl)benzotriazole, 2-(3-t-butyl-2-hydroxy-5-methylphenyl)-5-chlorobenzotriazle, 2,4-di-t-butylphenyl 3,5-di-t-butyl-4-hydroxybenzoate etc.

Metal soaps such as a Li salt of stearic acid, a Na salt of stearic acid, a Mg salt of stearic acid, a K salt of stearic acid, a Ca salt of stearic acid, a Ba salt of stearic acid, an Al salt of stearic acid, a Zn salt of stearic acid, a Fe salt of stearic acid, a Li salt of palmitic acid, a Na salt of palmitic acid, a Mg salt of palmetic acid, a K salt of palmitic acid, a Ca salt of palmatic acid, a Ba salt of palmitic acid, an Al salt of palmitic acid, a Zn salt of palmitic acid, a Fe salt of palmitic acid, a Ca salt of lauric acid, a Ba salt of lauric acid, a Zn salt of lauric acid, a Ca salt of behenic acid, a Zn salt of behenic acid, a Ca salt of 12-hydroxystearic acid, a Mg salt of 12-hydroxystearic acid, a Zn salt of 12-hydroxystearic acid etc.

Inorganic anti-blocking agents such as aluminum silicate, synthetic silica, natural silica, zeolite, kaolin and diatomaceous earth, and organic anti-blocking agent such as crosslinked polymethyl methacrylate.

Pigments such as carbon black, titanium oxide, phthalocyanine-based pigment, quinacridone-based pigment, isoindolinone-based pigment, perylene or perynine-based pigment, quinophthalone-based pigment, diketopyrrolopyrrol-based pigment, dioxazine-based pigment, disazo fused-based pigment, benzimidazolone-based pigment etc.

Flame-retardants such as decabromobiphenyl, antimony trioxide, phosphorus-based flame-retardant, aluminum hydroxide etc.

Nucleating agents such as sodium benzoate, sodium 2,2'-methylenebis(4,6-di-t-butylphenyl) phosphate, and bis(p-methylbenzylidene)sorbitol etc.

Fillers such as calcium carbonate, silicate, glass fiber, talc, kaolin, mica, barium sulfate, carbon black, carbon fiber, zeolite, metal powder, metal oxide, etc.

In the process of the present invention, a component having a lowest melting point among components constituting granules is 10 to 80 % by weight based on all components constituting granules and, preferably, a mixture is prepared so that it contains 10 to 50 % by weight of the component. When a component having a lowest melting point is mixed at 10 to 80 % by weight, there is a tendency that production of granules is easy, and productivity is improved, being preferable.

Usually, the antioxidant (2) is a component having a lowest melting point.

The present invention is a process for producing granules for a plastic additive, and the antioxidant (1), the antioxidant (2) and the additive group are contained at usually not less than 90 % by weight, preferably not less than 95 % by weight based on all components constituting the resulting granules.

A constitutional component of granules contains a binder which is not preferable to polyolefin such as low melting point polyethylene wax, paraffin and partial fatty acid ester of a polyhydric alcohol at usually 5 % by weight or less, preferably 1 % by weight or less, and more preferably substantially no binder, and little dust is contained in the resulting granules.

In the process of the present invention, an additive composition containing the antioxidant (1), the antioxidant (2) and the additive group as a main component (hereinafter, referred to as additive mixture or mixture in some cases) is heated and mixed at a temperature range of from (a melting point of a component having a lowest melting point -20) °C to lower than a melting point of a component having a lowest melting point, preferably a temperature range of from (a melting point of a component having a lowest melting point -20) °C to not higher than (a melting point of a component having a lowest melting point -1) °C, more preferably a temperature range of from not lower than (a melting point of a component having a lowest melting point -20) °C to not higher than (a melting point of a component having a lowest melting point -2) °C.
Specifically, when the melting point of the component having a lowest melting point is 50 °C, granulation is performed by heating and mixing at not lower than 30 °C and lower than 50 °C, preferably not lower than 30 °C and not higher than 49 °C, more preferably not lower than 30°C and not higher than 48 °C. It is required that the heating and mixing temperature (granulating temperature) is not lower than (a melting point of a component having a lowest melting point -20) °C, since there is a tendency that productivity is improved. It is required that the granulating temperature is lower than a melting point of a component having a lowest melting point, since there is a tendency that liquefication of a particle and chocking are prevented and stability of production is improved.

The present invention is the technique which is entirely different from and superior over the prior art, characterized in that a mixture of the antioxidant (1) and antioxidant (2) is heated and mixed at a temperature lower than a melting point of a component having a lowest melting point, thereby, it becomes possible to improve productivity of granules.

In the present invention, a melting point refers to a melting initiation temperature measured according to JIS K 0064 (Method of measuring melting point and melting range of chemical products).

Examples of a granulating method include a mixing and stirring-granulating method such as a high-speed mixer method, a roller compactor method, a pellet mill method, a disk pelleter method and an extrusion method, a compression granulating method, and an extrusion granulating method. An extrusion granulating method will be explained in more detail bellow.

In the extrusion granulating method, a mixture containing the antioxidant (1), antioxidant (2) and the additive group as a main component is placed into an extrusion granulator equipped with a screw, a rotation roll and a rotation wing, a mixture is brought into the partial melted state, that is, the wet state while stirring at a temperature range from not lower than (a melting point of a component having a lowest melting point -20) °C to lower than a melting point of a component having a lowest melting point, and this is granulated by extrusion through a die or a metal net.

As an extruding machine, a disk pelleter, a pellet mill or an extrusion granulator is preferably used. Inter alia, an extrusion granulator equipped with a multiaxial such as a biaxial or moniaxial screw is easy in controlling a temperature, being preferable. Particularly, a multiaxial extrusion granulator tends to be excellent in dispersion of the antioxidant (1), the antioxidant (2) and the additive group in granules, being preferable. In the case of an extrusion granulator, by setting a temperature at a temperature range of from not lower than (a melting point of a component having a lowest melting point -20) °C to lower than a melting point of a component having a lowest melting point at a heating and mixing part such as a part equipped with a screw, a granule can be produced.

Alternatively, by setting a temperature so that a set temperature becomes higher gradually from an introduction port, and setting a temperature of an adaptor part and a die part at the same temperature as or a slightly higher temperature than that of a heating and mixing part, production stability is more improved, being preferable.

In the present invention, a highest temperature of a mixture to be heated and mixed is lower than a melting point of a component having a lowest melting point among components constituting granules and, in the case of an extrusion granulator, a highest temperature of a mixture when heated and mixed can be measured at an adaptor part which is an outlet of a heating and mixing part, and the temperature is adjusted at lower than a melting point of a component having a lowest melting point, among components constituting granules.

Examples of a method of a introducing the antioxidant (1), the antioxidant (2) and, optionally, the additive
into an extrusion granulator include (i) a method of introducing the antioxidant (1), the antioxidant (2) and, optionally, the additive into a hopper of an extrusion granulator at once, (ii) a method of mixing the antioxidant (1), the antioxidant (2) and, optionally, the additive with a Henschel mixer or a tumbler mixer in advance, and introducing the mixture into an extrusion granulator, and (iii) a method of introducing the antioxidant (1), the antioxidant (2) and, optionally, the additive into an extrusion granulator through separate hoppers of the extrusion granulator, respectively. Inter alia, since the method (ii) has a tendency that dispersion of the antioxidant (1), the antioxidant (2) and the additive in granules is excellent, this method is preferable.

Granules obtained by the process of the present invention are suitably used as an additive for a plastic such as a thermoplastic resin which easily undergoes deterioration due to heat or light.

Examples of the thermoplastic resin include polyolefin (polyethylene, polypropylene, ethylene-vinyl acetate copolymer etc.), polystyrene-based resin (GP-PS, HI-PS), styrene-butadiene copolymer, acrylonitrile styrene-butadiene tercopolymer etc.), polyamide-based resin (6 nylon, 12 nylon etc.), cyclic polyolefin, chlorine-containing polymer (polyvinyl chloride, chlorinated rubber etc.), polyester (polyethylene terephthalate, polybutylene terephthalate etc.), polyurethane, and engineering plastic (polyphenylene ether, polycarbonate, polyether sulfone, liquid crystal polyester etc.).

Among the thermoplastic resins, polyolefin is preferably used.

An amount of granules to be added to a plastic is in a range of usually 0.005 to 5 parts by weight, preferably 0.01 to 1 part by weight based on 100 parts by weight of a plastic. It is preferable that the amount is not less than 0.005 parts by weight, since there is a tendency that the oxidation preventing ability is increased. It is preferable that the amount is not more than 5 parts by weight, since there is a tendency that performance possessed by a plastic is sufficiently exhibited.

Examples of a method of blending granules obtained in the present invention into a plastic include a method of mixing granules and a plastic, and melting and kneading the mixture with an extrusion molding machine, and a method of feeding a solution obtained by dissolving or suspending granules in a solvent in advance to a solution after polymerization of a plastic and, thereafter, removing a solvent by a method such as distillation. The thus stabilized plastic can be processed into products such as a film, a molded article and a pipe by the known method.

According to the present invention, granules which are suitable for a plastic additive can be produced at high productivity. In addition, products can be stably produced without liquefaction of a mixture or chocking of an extrusion granulator with a mixture upon production of the granules. Further, the resulting granules remarkably reduce dusting even without using a binder which is not preferable to polyolefin such as paraffin, and have excellent fluidity upon addition of the resulting granules to a plastic such as polyolefin.

### EXAMPLES

The present invention will be explained in more detail below based on Examples, but it is needless to say that the present invention is not limited by these Examples.

Raw materials used in the following Examples and Comparative Examples are shown below in Tables 1 to 3.

**Table 1**

| Antioxidant (1) | Chemical name | Melting point (°C) |
|---|---|---|
| 1-1 | 3,9-Bis[2-{3-(3-t-butyl-4-hydroxy-5-methylphenyl)propionyloxy}-1,1-dimethylethyl]-2,4,8,10-tetraoxaspiro[5 · 5]undecane | 111 |
| 1-2 | Tetrakis{3-(3,5-di-t-butyl-4-hydroxyphenyl)propionic acid} pentaerythrityl ester | 114 |
| 1-3 | {3-(3,5-Di-t-butyl-4-hydroxyphenyl)propionic acid}octadecyl ester | 52 |

**Table 2**

| Antioxidant (2) | Chemical name | Melting point (°C) |
|---|---|---|
| 2-1 | 3,3'-Thiodipropionic acid di-n-tetradecyl ester | 51 |

**Table 3**

| Other additive | Chemical name | Melting point (°C) |
|---|---|---|
| 3-1 | Tris(2,4-di-t-butylphenyl)phosphite | 183 |
| StCa | Calcium stearate | 150 |
| DHT | Hydrotalcite manufactured by KYOWA CHEMICAL INDUSTRY CO., LTD. | Inorganic substance |

### Example 1

Into a Henschel mixer were placed 1000 g of an antioxidant (1-1) and 1000 g of an antioxidant (2-1), and this was mixed with a stirring wing at a rotation number of 950 rpm for 30 seconds to obtain a mixture. The mixture was placed into a biaxial extrusion granulator (manufactured by Nakatani Machinery Co., Ltd., Model NAS, 30 mm φ biaxial vent extruding machine, L/D:28) through a hopper, and extruded to obtain strand-like granules, which were cut with a cutter to prepare pellet-like granules. The granulator was operated under the operation conditions of a heating and mixing part (C1:35 °C, C2:40 °C, C3:40 °C, C4:40 °C), a die part (D:47 °C), and a screw rotation number of 40 rpm, thereby, granules could be produced at a production rate of 5.1 kg/hr. A highest temperature of the mixture (temperature at an A part) at production was 48 °C.

### Examples 2 to 3 and Comparative Examples 1 to 6

According to the same operation as that of Example 1 except that antioxidants described in Table 4 and, optionally, other additives were used and, as the operation conditions of an extrusion granulator, the conditions described in Table 4 among conditions 1 to 4 described in Table 5 were used, granules were produced. Results together with the results of Example 1 are shown in Table 4.

**Table 4**

| | wt% of mixture | | | | | | | Mixture highest temperature (°C) | Lowest melting point (°C) (Substance name) | Operation condition | Heating temperature range(°C) | Productivity (g/hr) |
|---|---|---|---|---|---|---|---|---|---|---|---|---|
| | 1-1 | 1-2 | 1-3 | 2-1 | StCa | 3-1 | DHT | | | | | |
| Example 1 | 50 | - | - | 50 | - | - | - | 48 | 51 | Condition 1 | 35-47 | 5.1 |
| | | | | | | | | | 2-1 | | | |
| Comparative Example 1 | 50 | - | - | 50 | - | - | - | Unmeasured | 51 | Condition 4 | 40-55 | Emulsion-like |
| | | | | | | | | | 2-1 | | | |
| Example 2 | 33 | - | - | 67 | - | - | - | 48 | 51 | Condition 1 | 35-47 | 5.3 |
| | | | | | | | | | 2-1 | | | |
| Example 3 | 33 | - | - | 33 | - | - | 33 | 49 | 51 | Condition 2 | 40-50 | 4.1 |
| | | | | | | | | | 2-1 | | | |
| Comparative Example 2 | - | 20 | - | - | 40 | 40 | - | 122 | 114 | Condition 3 | 110-120 | 2.1 |
| | | | | | | | | | 1-2 | | | |
| Comparative Example 3 | - | 20 | - | - | 40 | 40 | - | Unmeasured | 114 | Condition 2 | 40-50 | Chocked |
| | | | | | | | | | 1-2 | | | |
| Comparative Example 4 | - | 50 | - | - | 50 | - | - | Unmeasured | 114 | Condition 3 | 110-120 | 1.2 |
| | | | | | | | | | 1-2 | | | |
| Comparative Example 5 | - | - | 67 | - | 33 | - | - | Unmeasured | 51 | Condition 1 | 35-47 | 1.9 |
| | | | | | | | | | 2-1 | | | |
| Comparative Example 6 | 100 | - | - | - | - | - | - | Unmeasured | 111 | Condition 2 | 40-50 | Chocked |
| | | | | | | | | | 1-1 | | | |

**Table 5**

| Extrusion temperature (°C) | C1 | C2 | C3 | C4 | D |
|---|---|---|---|---|---|
| Condition 1 | 35 | 40 | 40 | 40 | 47 |
| Condition 2 | 40 | 45 | 45 | 45 | 50 |
| Condition 3 | 110 | 115 | 115 | 115 | 120 |
| Condition 4 | 40 | 45 | 50 | 55 | 50 |

| | | | | | |
|---|---|---|---|---|---|
| C1 to C4 represent set heating temperatures at a heating and mixing part of an extruder. D represents a set heating temperature of a die part of an extruder shown in Fig 1. | | | | | |

Since granules obtained by the process of the present invention, by mixing with a plastic such as polyolefin, are such that a molded article of the plastic can remarkably reduce oxidation deterioration generated due to light or heat, the resulting molded article can suitably be used as a member of automobiles and aircrafts; a member of television, personal computers and cellular phones; a life utensil such as PET bottles and supermarket checkout bags.

## Claims

1. A process for producing granules, comprising heating and mixing an additive composition containing an antioxidant represented by the formula (1) and an antioxidant represented by the formula (2) as an essential component, wherein a content of a component having a lowest melting point in granules is 10 to 80 % by weight based on a total components constituting granules, and a temperature for heating and mixing is in a temperature range of from not lower than (a melting point of a component having a lowest melting point -20) °C to lower than a melting point of a component having a lowest melting point 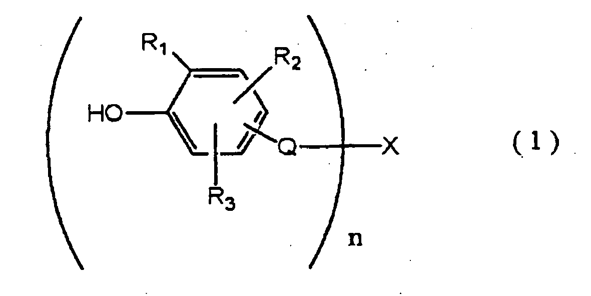 (In the formula (1), R₁ represents an alkyl group of a carbon number of 1 to 8, R₂ and R₃ each represent independently a hydrogen atom or an alkyl group of a carbon number of 1 to 8, at least one of R₂ and R₃ represents an alkyl group, Q represents a single bond, a -CH₂CH₂CO₂- group or a -CH₂CH₂CONH- group, n represents an integer of 1 to 4, X represents a n-valent hydrocarbon group of a carbon number of 1 to 22 or a divalent sulfur atom, and the hydrocarbon group may contain a hetero atom and, when n is not less than 2, may be a cyclic structure)
(R₄-Y-S-CH₂-CH₂-CO₂)ₘ-Z (2)
(In the formula (2), R₄ represents an alkyl group of a carbon number of 12 to 18, Y represents a single bond or a -CH₂CH₂-CO₂- group, m represents an integer of 1 to 4, and Z represents a m-hydric alcohol residue of a carbon number of 5 to 18), wherein the antioxidant (2) is at least one kind of antioxidant selected from the group consisting of 3,3'-thiodipropionic acid di-n-dodecyi ester, 3,3'-thiodipropionic acid di-n-tetradecyl ester, 3,3'-thiodipropionic acid di-n-octadecyl ester, and tetrakis(3-n-dodecylthiopropionic acid) pentaerythrityl ester.

2. The process according to claim 1, wherein heating and mixing is performed with an extrusion granulator.

3. The process according to claim 1 or 2, wherein the antioxidant (1) is at least one kind of antioxidant selected from the group consisting of 3,9-bis[2-{3-(3-t-butyl-4-hydroxy-5-methylphenyl)propionyloxy}-1,1-dimethylethyl]-2,4,8,10-tetraoxaspiro[5 · 5]undecane and tetrakis[3-(3,5-di-t-butyl-4-hydroxyphenyl)propionic acid] pentaerythrityl ester.

4. The process according to any one of claims 1 to 3, wherein a total amount of three components of an antioxidant (1), an antioxidant (2) and at least one kind of additive selected from the group consisting of a neutralizing agent, a phosphorus-based antioxidant, a hindered amine-based light stabilizer, an ultraviolet absorbing agent, a metal soap, an anti-blocking agent, a pigment, a flame-retardant, a nucleating agent and a filler, is not less than 90 % by weight based on all components constituting granules.

## Patentansprüche

1. Ein Verfahren zur Herstellung von Granulat, umfassend Erwärmen und Mischen einer Additivzusammensetzung, die ein durch die Formel (1) dargestelltes Antioxidans und ein durch die Formel (2) dargestelltes Antioxidans als wesentlichen Bestandteil enthält, wobei ein Gehalt eines Bestandteils mit einem niedrigsten Schmelzpunkt in dem Granulat 10 bis 80 Gew.-%, bezogen auf die gesamten Bestandteile, die das Granulat bilden, beträgt, und eine Temperatur zum Erwärmen und Mischen in einem Temperaturbereich von nicht weniger als (ein Schmelzpunkt eines Bestandteils mit einem niedrigsten Schmelzpunkt - 20) °C bis weniger als ein Schmelzpunkt eines Bestandteils mit einem niedrigsten Schmelzpunkt beträgt, 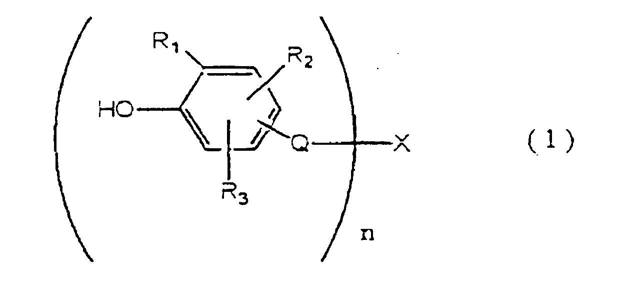 (in der Formel (1) bedeutet R₁ einen Alkylrest mit einer Kohlenstoffzahl von 1 bis 8, R₂ und R₃ bedeuten jeweils unabhängig voneinander ein Wasserstoffatom oder einen Alkylrest mit einer Kohlenstoffzahl von 1 bis 8, mindestens einer von R₂ und R₃ bedeutet einen Alkylrest, Q bedeutet eine Einfachbindung, einen Rest -CH₂CH₂CO₂- oder einen Rest -CH₂CH₂CONH-, n bedeutet eine ganze Zahl von 1 bis 4, X bedeutet einen n-wertigen Kohlenwasserstoffrest mit einer Kohlenstoffzahl von 1 bis 22 oder ein zweiwertiges Schwefelatom und der Kohlenwasserstoffrest kann ein Heteroatom enthalten und, wenn n nicht weniger als 2 ist, eine cyclische Struktur sein),
(R₄-Y-S-CH₂-CH₂-CO₂)ₘ-Z (2)
(in der Formel (2) bedeutet R₄ einen Alkylrest mit einer Kohlenstoffzahl von 12 bis 18, Y bedeutet eine Einfachbindung oder einen Rest -CH₂CH₂-CO₂-, m bedeutet eine ganze Zahl von 1 bis 4 und Z bedeutet einen m-wertigen Alkoholrest mit einer Kohlenstoffzahl von 5 bis 18), wobei das Antioxidans (2) mindestens eine Art von Antioxidans, ausgewählt aus der Gruppe bestehend aus 3,3'-Thiodipropionsäuredi-n-dodecylester, 3,3'-Thiodipropionsäuredi-n-tetradecylester, 3,3'-Thiodipropionsäuredi-n-octadecylester und Tetrakis(3-n-dodecylthiopropionsäure)pentaerythritylester, ist.

2. Das Verfahren nach Anspruch 1, wobei Erwärmen und Mischen mit einem Extrusionsgranulator durchgeführt wird.

3. Das Verfahren nach Anspruch 1 oder 2, wobei das Antioxidans (1) mindestens eine Art von Antioxidans, ausgewählt aus der Gruppe bestehend aus 3,9-Bis[2-{3-(3-t-Butyl-4-hydroxy-5-methylphenyl)propionyloxy}-1,1-dimethylethyl]-2,4,8,10-tetraoxaspiro[5.5]undecan und Tetrakis[3-(3,5-di-t-butyl-4-hydroxyphenyl)propionsäure]-pentaerythritylester, ist.

4. Das Verfahren nach einem der Ansprüche 1 bis 3, wobei eine Gesamtmenge der drei Bestandteile eines Antioxidans (1), eines Antioxidans (2) und mindestens einer Art von Additiv, ausgewählt aus der Gruppe bestehend aus einem Neutralisationsmittel, einem Antioxidans auf Phosphorbasis, einem Lichtstabilisator auf der Basis eines gehinderten Amins, einem UV-Absorptionsmittel, einer Metallseife, einem Antiblockiemlittel, einem Pigment, einem flammhemmendes Mittel, einem Keimbildner und einem Füllstoff, nicht weniger als 90 Gew.-%, bezogen auf alle Bestandteile, die das Granulat bilden, beträgt.

## Revendications

1. Procédé de production de granulés comprenant le chauffage et le mélange d'une composition d'additif contenant un antioxydant représenté par la formule (1) et un antioxydant représenté par la formule (2) comme constituants essentiels, dans lequel la teneur du constituant présentant le point de fusion le plus faible dans les granulés est de 10 à 80 % en poids rapporté à tous les constituants constituant les granulés, et une température de chauffage et de mélange se trouve dans un intervalle de température allant de (le point de fusion du constituant présentant le point de fusion le plus faible -20)°C à une température inférieure au point de fusion du constituant présentant le point de fusion le plus faible 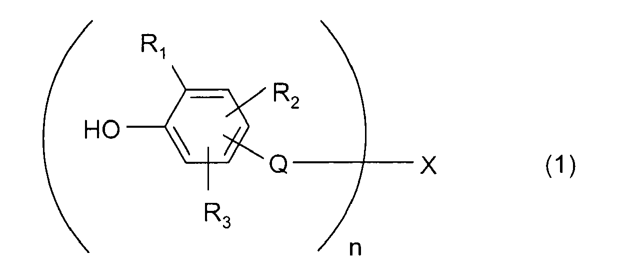 (dans la formule (1), R₁ représente un groupe alkyle ayant de 1 à 8 atomes de carbone, R₂ et R₃ représentent chacun indépendamment un atome d'hydrogène ou un groupe alkyle ayant de 1 à 8 atomes de carbone, au moins un de R₂ et R₃ représente un groupe alkyle, Q représente une liaison simple, un groupe -CH₂CH₂CO₂- ou un groupe -CH₂CH₂CONH-, n représente un nombre entier de 1 à 4, X représente un groupe hydrocarboné n-valent ayant de 1 à 22 atomes de carbone ou un atome de soufre divalent et le groupe hydrocarboné peut contenir un hétéroatome et, lorsque n n'est pas inférieur à 2, peut être une structure cyclique)
(R₄-Y-S-CH₂-CH₂-CO₂)ₘ-Z (2)
(dans la formule (2), R₄ représente un groupe alkyle ayant de 12 à 18 atomes de carbone, Y représente une liaison simple ou un groupe -CH₂CH₂-CO₂-, m représente un nombre entier de 1 à 4, et Z représente un résidu d'alcool m-hydrique ayant de 5 à 18 atomes de carbone), dans lequel l'antioxydant (2) est au moins un type d'antioxydant choisi dans le groupe constitué d'ester di-n-dodécylique d'acide 3,3'-thiodipropionique, d'ester di-n-tétradécylique d'acide 3,3'-thiodipropionique, d'ester di-n-octadécylique d'acide 3,3'-thiodipropionique et d'ester pentaérythritylique de tétrakis(acide 3-n-dodécylthiopropionique).

2. Procédé selon la revendication 1, dans lequel le chauffage et le mélange sont réalisés avec un dispositif de granulation par extrusion.

3. Procédé selon la revendication 1 ou 2, dans lequel l'antioxydant (1) est au moins un type d'antioxydant choisi dans le groupe constitué de 3,9-bis[2-{3-(3-t-butyl-4-hydroxy-5-méthylphényl)propionyloxy}-1,1-diméthyléthyl]-2,4,8,10-tétraoxaspiro[5.5]undécane et d'ester pentaérythritylique de tétrakis[acide 3-(3,5-di-t-butyl-4-hydroxyphényl)propionique].

4. Procédé selon l'une quelconque des revendications 1 à 3, dans lequel la quantité totale de trois constituants d'un antioxydant (1), d'un antioxydant (2) et d'au moins un type d'additif choisi dans le groupe constitué d'un agent neutralisant, d'un antioxydant à base de phosphore, d'un stabilisateur à la lumière à base d'amine encombrée, d'un agent absorbant les ultraviolets, d'un savon métallique, d'un agent anti-adhérence de contact, d'un pigment, d'un retardateur de flamme, d'un agent de nucléation et d'une charge, n'est pas inférieure à 90 % en poids rapporté à tous les constituants constituant les granulés.
